# EUROPEAN PATENT SPECIFICATION

(11) **EP 3 806 501 B1**
(45) Date of publication and mention of the grant of the patent: **08.11.2023**
(21) Application number: 19815902.2
(22) Date of filing: 04.01.2019
(51) Int. Cl.: H04W 4/02

(54) **ELECTRONIC PRICE TAG POSITIONING METHOD, APPARATUS, AND SYSTEM**
VERFAHREN, VORRICHTUNG UND SYSTEM ZUR POSITIONIERUNG VON ELEKTRONISCHEN PREISSCHILDERN
PROCÉDÉ, APPAREIL ET SYSTÈME DE POSITIONNEMENT D'ÉTIQUETTE DE PRIX ÉLECTRONIQUE

(30) Priority: 06.06.2018 CN 201810587179
(43) Date of publication of application: 14.04.2021
(60) Divisional application: 23199652.1
(73) Proprietor: Hanshow Technology Co., Ltd., Jiaxing, Zhejiang 314031 (CN)
(72) Inventor: HOU, Shiguo, Jiaxing Zhejiang 314000 (CN); LIANG, Min, Jiaxing Zhejiang 314000 (CN); CHEN, Jun, Jiaxing Zhejiang 314000 (CN); SHEN, Ming, Jiaxing Zhejiang 314000 (CN); JIANG, Qi, Jiaxing Zhejiang 314000 (CN); ZHAO, Yang, Jiaxing Zhejiang 314000 (CN)
(74) Representative: Boult Wade Tennant LLP
(86) International application number: PCT/CN2019/070432
(87) International publication number: WO 2019/233099

(56) References cited:
- EP-A1- 2 733 503
- CN-A- 101 750 598
- CN-A- 104 199 023
- CN-A- 105 158 733
- CN-A- 105 809 218
- US-A1- 2013 281 110
- US-A1- 2017 139 032

## Description

### TECHNICAL FIELD

The present disclosure relates to the field of positioning technology, and in particular to an electronic price tag positioning method, apparatus and system.

### BACKGROUND

The traditional electronic price tag system mainly achieves a function of displaying goods price, and pushes information that needs to be displayed from a core system to an electronic price tag terminal for display. As the supermarket has such business requirements as real-time search for goods, shopping guides and the like, how to position the goods in the supermarket is a topic. Traditional indoor positioning methods include iBeacon (which is a new function equipped with the OS of mobile devices released by Apple Inc. The working mode of iBeacon is that a device equipped with a BLE (Bluetooth Low Energy) wireless communication function uses a BLE technology to send its own unique ID to the surrounding areas, and an application software that receives the ID will take some actions based on the ID), UWB (Ultra Wideband, which is a carrierless communication technology that uses nanosecond to picosecond non-sine wave narrow pulses to transmit data, and which is used in a short-distance high-speed data transmission), WiFi fingerprints, etc. The positioning accuracies of these methods are all above 1m, and even the errors thereof reach 10m, which cannot meet the requirements of dense commodity display positioning.

EP2733503A1 discloses a radio frequency positioning system and method, in which "one or a plurality of mobile tags exchange information with one or a plurality of location tags with fixed locations to generate information comprising information for determining a location of the mobile tag. Then, information about the location tag or the mobile tag is directly transmitted to a reader located in a center of a locating area in a long-distance transmission manner, then to a management computer, thereby achieving the locating of the mobile tag".

### SUMMARY

Embodiments of the present disclosure provide an electronic price tag positioning method, apparatus and system. Location information of an electronic price tag whose location is unknown can be determined through a neighborhood relationship among the electronic price tags and an electronic price tag whose location is known, which thus can improve positioning accuracy. The invention is defined by the subject matter of the independent claims. Advantageous enhancements are subject to the dependent claims.

### BRIEF DESCRIPTION OF DRAWINGS

To illustrate more clearly the embodiments of the present disclosure or the technical schemes of the prior art, a brief description of the accompanying drawings in the embodiments or the prior art will be given below. Obviously, the accompanying drawings described below are only some embodiments described in this disclosure. For those of ordinary skill in the art, other drawings can also be obtained without any creative labor from these drawings.
FIG. 1 is a block diagram of an electronic price tag positioning system provided in the present disclosure;
FIG. 2 is a flowchart of an electronic price tag positioning method provided in the present disclosure;
FIG. 3 is a block diagram of an electronic price tag positioning apparatus provided in the present disclosure; and
FIG. 4 is a flowchart of a method for positioning an electronic price tag using an electronic price tag positioning system provided in the present disclosure.

### DESCRIPTION OF EMBODIMENTS

Hereinafter the technical solution in the embodiments of the present disclosure will be described clearly and integrally in combination with the accompanying drawings in the embodiments of the present disclosure, and obviously the described embodiments are merely part of the embodiments, rather than all of the embodiments. Any other embodiment obtained by those skilled in the art based on the embodiments of the present disclosure without paying any creative labor fall within the protection scope of the present disclosure.

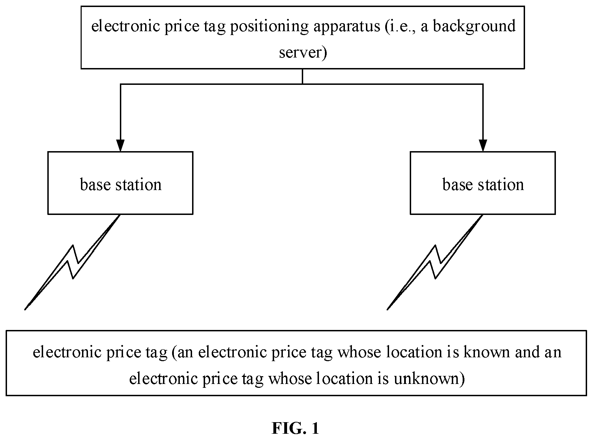

In an embodiment of the present disclosure, an electronic price tag positioning system is provided. As shown in FIG. 1, the system comprises an electronic price tag positioning apparatus (ie, a background server), a base station, and an electronic price tag.

Herein, the electronic price tag includes an electronic price tag whose location is known and an electronic price tag whose location is unknown. Generally, there is one electronic price tag whose location is known in each shelf, and the number of the electronic price tag whose location is unknown depends on how many types of goods there are.

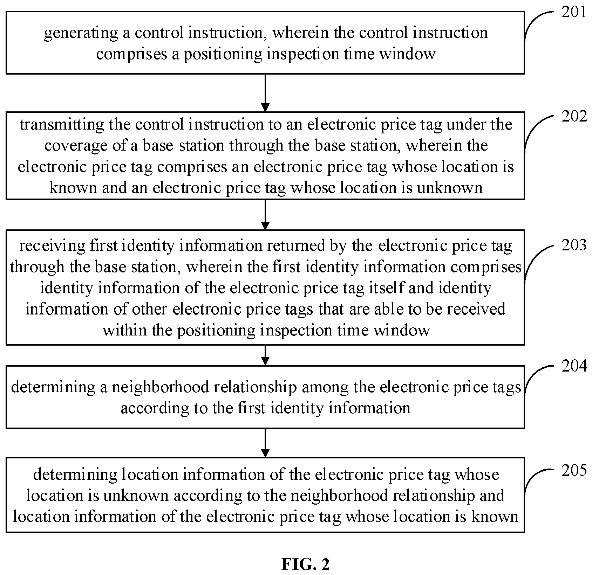

The electronic price tag positioning apparatus implements the positioning of the electronic price tag according to the method flow shown in FIG. 2, and the electronic price tag positioning method comprises:
a step 201 of generating a control instruction, wherein the control instruction comprises a positioning inspection time window;
a step 202 of transmitting the control instruction to an electronic price tag under the coverage of a base station through the base station, wherein the electronic price tag comprises an electronic price tag whose location is known and an electronic price tag whose location is unknown;
a step 203 of receiving first identity information returned by the electronic price tag through the base station, wherein the first identity information comprises identity information of the electronic price tag itself and identity information of other electronic price tags that are able to be received within the positioning inspection time window;
a step 204 of determining a neighborhood relationship among the electronic price tags according to the first identity information;
a step 205 of determining location information of the electronic price tag whose location is unknown according to the neighborhood relationship and location information of the electronic price tag whose location is known.

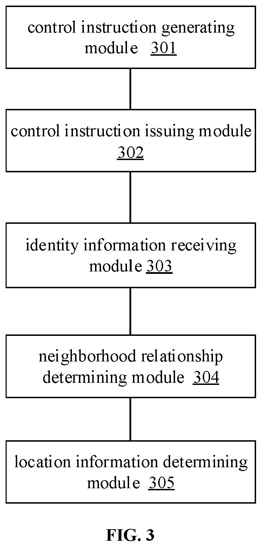

From the perspective of the electronic price tag positioning apparatus itself, the electronic price tag positioning apparatus may include several modules as shown in FIG. 3 as below:
a control instruction generating module 301 for generating a control instruction, wherein the control instruction comprises a positioning inspection time window;
a control instruction issuing module 302 for transmitting the control instruction to an electronic price tag under the coverage of a base station through the base station, wherein the electronic price tag comprises an electronic price tag whose location is known and an electronic price tag whose location is unknown;
an identity information receiving module 303 for receiving first identity information returned by the electronic price tag through the base station, wherein the first identity information comprises identity information of the electronic price tag itself and identity information of other electronic price tags that are able to be received within the positioning inspection time window;
a neighborhood relationship determining module 304 for determining a neighborhood relationship among the electronic price tags according to the first identity information;
a location information determining module 305 for determining location information of the electronic price tag whose location is unknown according to the neighborhood relationship and location information of the electronic price tag whose location is known.

As used above, the term "unit" or "module" can realize a combination of software and/or hardware with predetermined functions. Although preferably the apparatus described in the above embodiments is implemented by software, implementation by hardware or a combination of software and hardware is also possible and conceivable.

In the embodiments of the present disclosure, due to the wireless communication protocol of the electronic price tag on 2.4GHz, the conventional practice is that a radio frequency module of the electronic price tag automatically wakes up every other time period to monitor whether there is a communication request. If there is a communication request, then it is practicable to enter the data transmission mode for data reception, then to execute or store the received instructions and data. If the base station device communicating with the radio frequency module intends to communicate with a certain electronic price tag, the electronic price tag needs to be awakened at first for a period longer than a monitoring period of the electronic price tag, and then the instruction and data are transmitted. In this case, the control instruction generated by the step 201 or the control instruction generating module 301 needs to include a positioning inspection time window, which may be 4s to 16s. The electronic price tag needs to transmit its own identity information within the positioning inspection time window, and performs reception in other time except transmission of its own identity information, and records the identity information transmitted by other electronic price tags.

In order to prevent conflicts in transmission moments of a large number of electronic price tags, all electronic price tags in the present disclosure will adopt an automatic avoidance rule to transmit their own identity information in staggered time slots. The automatic avoidance rule is, for example, the ID of the electronic price tag * a basic time offset.

In the embodiments of the present disclosure, the control instruction may also include a wireless channel and power used by the electronic price tag for transmitting the identity information. The control instruction aims to determine that 90% of the electronic price tag transmits a signal in a coverage less than 50 cm under this configuration. Then the step 202 or the control instruction issuing module 302 will transmit the control instruction to all electronic price tags under the coverage of the base station. The electronic price tag will transmit its own identity information according to the wireless channel and power. Specifically, the electronic price tag will transmit its own identity information repeatedly at a certain cycle and low power. When the electronic price tag does not transmit its own identity information, it will record the identity information of other electronic price tags (the electronic price tag whose location is known and the electronic price tag whose location is unknown) that can be correctly received.

Transmitting the control instruction itself does not depend on whether or not geographic location information of the electronic price tag is specifically known, but only depends on it is known which base station device can receive the signal of the electronic price tag logically, and then the control instruction can be transmitted by the corresponding base station device communicating with the electronic price tag.

In the embodiments of the present disclosure, the received information will be returned to the electronic price tag positioning apparatus through the base station after the positioning inspection time window ends, and at this time, the control instruction may also include an information return time window. Also in order to prevent conflicts in transmission moments of a large number of electronic price tags, all electronic price tags will use an automatic avoidance rule within the information return time window to return the first identity information (that is, their own identity information and identity information of other electronic price tags that are able to be received) in staggered time slots. Also the automatic avoidance rule is, for example, the ID of the electronic price tag * a basic time offset.

In the embodiments of the present disclosure, after the electronic price tag returns the first identity information, the electronic price tag positioning apparatus executes the step 203 or activates the identity information receiving module 303, receives the first identity information that is returned by the electronic price tag through the base station within the information return time window, then executes the step 204 or activates an identity information receiving module 304, and determines the neighborhood relationship among the electronic price tags according to the first identity information. The neighborhood relationship is determined in the following manner: if an electronic price tag can receive the identity information transmitted by other electronic price tags within the positioning inspection time window, the electronic price tag and these corresponding electronic price tags constitute a neighborhood relationship.

Then, after the neighborhood relationship is determined according to the first identity information returned by all the electronic price tags, a neighborhood relationship network is built. Then the electronic price tag positioning apparatus executes the step 205 or activates an identity information receiving module 305 to determine location information of the electronic price tag whose location is unknown according to the neighborhood relationship and the location information of the electronic price tag whose location is known.

The location information can be determined by calculating a connection relationship between each electronic price tag whose location is unknown and the nearest several electronic price tags whose location is known according to the neighborhood relationship, which may be one hop or multiple hops, and finally the position of the electronic price tag whose location is unknown can be obtained according to the weighted average of the known locations of the nearest several electronic price tags whose location is known that the electronic price tag whose location is unknown can reach.

For example, the electronic price tag whose location is unknown is C1, and the electronic price tag whose location is known is D1. C1 can directly receive the identity information of D1, then C1 can reach D1 by one hop, and the location information of C1 can be the location information of D1.

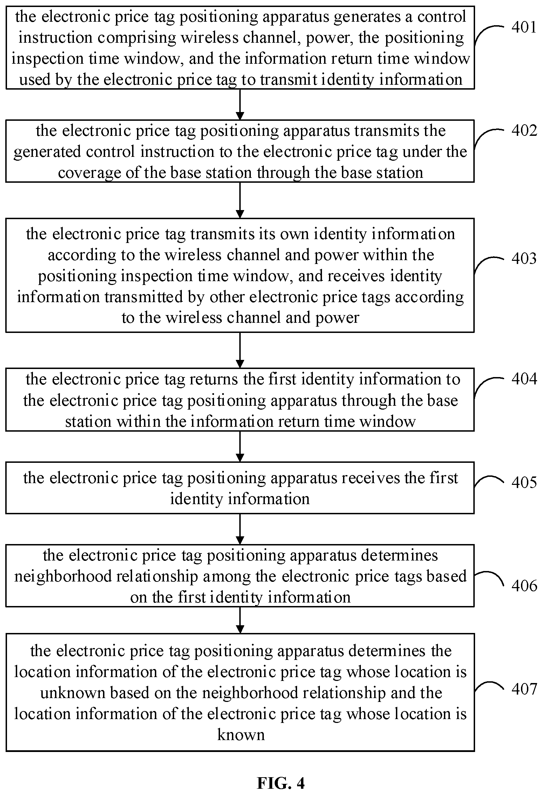

In the embodiments of the present disclosure, from the perspective of the electronic price tag positioning system as a whole, the electronic price tag positioning method can be implemented by the following steps, as shown in FIG. 4, comprising:
a step 401: the electronic price tag positioning apparatus generates a control instruction comprising a wireless channel, power, a positioning inspection time window, and a information return time window used by the electronic price tag to transmit identity information;
a step 402: the electronic price tag positioning apparatus transmits the generated control instruction to the electronic price tag under the coverage of the base station through the base station;
a step 403: the electronic price tag transmits its own identity information according to the wireless channel and the power within the positioning inspection time window, and receives identity information transmitted by other electronic price tags according to the wireless channel and power;
a step 404: the electronic price tag returns the first identity information to the electronic price tag positioning apparatus through the base station within the information return time window;
a step 405: the electronic price tag positioning apparatus receives the first identity information;
a step 406: the electronic price tag positioning apparatus determines a neighborhood relationship among the electronic price tags according to the first identity information;
a step 407: the electronic price tag positioning apparatus determines the location information of the electronic price tag whose location is unknown according to the neighborhood relationship and the location information of the electronic price tag whose location is known.

In addition, when a certain shelf is changed, the position of a shelf electronic price tag corresponding to the shelf is changed as well, so how to determine the position of the shelf electronic price tag. Since a distance between two shelf electronic price tags is longer than a distance between the electronic price tags on the shelves, the wireless channel and power in the above-mentioned control instruction can be changed and set as the communication channel and communication frequency between the shelf electronic price tags. In this way, the position of the shelf electronic price tag whose position is changed can be determined through shelf electronic price tags at different positions. With this configuration parameter (i.e. wireless channel, power), a transmission signal coverage distance of the shelf electronic price tag is 2 to 5 meters.

In an embodiment of the present disclosure, there is further provided a computer device comprising a memory, a processor and a computer program stored on the memory and executable by the processor, and the processor implements, when executing the computer program, the electronic price tag positioning method as described above.

In an embodiment of the present disclosure, there is further provided a computer readable storage medium storing therein a computer program for executing the electronic price tag positioning method as described above.

In summary, the present disclosure uses the features of the electronic price tag wireless communication system itself to locate the price tag, that is, to determine the location information of the electronic price tag whose location is unknown through the neighborhood relationship among the electronic price tags and the electronic price tag whose location is known, thereby improving the positioning accuracy to below 50cm.

Persons skilled in the art shall understand that, the embodiments of the present disclosure can be provided as a method, a system or a computer program product. Therefore, the present disclosure can adopt the forms of a full hardware example, a full software example, or combination of a software example and a hardware example. Moreover, the present disclosure can adopt the form of a computer program product that is implemented on one or more computer-usable storage medium (comprising but not limited to a disk memory, a CD-ROM, an optical memory, and etc.) comprising computer-usable program codes.

The present disclosure is described with reference to flow diagrams and/or block diagrams of the method, the device (system) and the computer program product according to the embodiment of the present disclosure. It should be understood that each flow and/or block in the flow diagrams and/or block diagrams, and the combination of the flows and/or blocks in the flow diagrams and/or block diagrams can be achieved by computer program commands. These computer program commands can be provided to a CPU of a general-purpose computer, a special-purpose computer, an embedded processor or other programmable data processing device to produce a machine, so that a device for achieving functions designated in one or more flows in the flow diagrams and/or one or more blocks in the block diagrams can be generated by the command executed by the CPU of the computer or other programmable data processing device.

These computer program instructions can also be stored in a computer-readable memory that can guide a computer or other programmable data processing device to operate in a special way, so that the instruction stored in the computer-readable memory generates a manufactured product comprising a instruction device which achieves functions designated in one or more flows in the flow diagrams and/or one or more blocks in the block diagrams.

These computer program instructions can also be loaded on a computer or other programmable data processing device, on which a series of operation steps are executed to generate processing achieved by the computer, so that the instruction executed on the computer or other programmable data processing device is provided for being used in the steps of achieving functions designated in one or more flows in the flow diagrams and/or one or more blocks in the block diagrams.

The foregoing is merely a preferred embodiment of the present disclosure and is not intended to limit the present disclosure, and various modifications and variations can be made to the embodiment of the present disclosure by those skilled in the art.

## Claims

1. An electronic price tag positioning method, **characterized by** comprising:
generating (201), by an electronic price tag positioning apparatus, a control instruction, wherein the control instruction comprises a positioning inspection time window and an information return time window;
transmitting (202), by the electronic price tag positioning apparatus, the control instruction to electronic price tags under coverage of a base station through the base station, wherein the electronic price tags comprise electronic price tags whose location are known and electronic price tags whose location are unknown;
receiving (203), by the electronic price tag positioning apparatus, first identity information returned by the electronic price tags through the base station within the information return time window, wherein the first identity information comprises identity information of an electronic price tag itself and identity information of other electronic price tags that are able to be received within the positioning inspection time window, and the other electronic price tags comprise electronic price tags whose location are known and electronic price tags whose location are unknown;
determining (204), by the electronic price tag positioning apparatus, a neighborhood relationship among the electronic price tags according to the first identity information returned by all the electronic price tags; and
determining (205), by the electronic price tag positioning apparatus, location information of the electronic price tags whose location are unknown according to the neighborhood relationship and location information of the electronic price tags whose location are known.

2. The electronic price tag positioning method according to claim 1, wherein the control instruction further comprises a wireless channel and power used by the electronic price tags for transmitting the identity information;
the first identity information comprises:
identity information of an electronic price tag itself and identity information transmitted in accordance with the wireless channel and the power by other electronic price tags that are able to be received within the positioning inspection time window.

3. An electronic price tag positioning apparatus, **characterized by** comprising:
a control instruction generating module (301) for generating a control instruction, wherein the control instruction comprises a positioning inspection time window and an information return time window;
a control instruction issuing module (302) for transmitting the control instruction to electronic price tags under coverage of a base station through the base station, wherein the electronic price tags comprise electronic price tags whose location are known and electronic price tags whose location are unknown;
an identity information receiving module (303) for receiving first identity information returned by the electronic price tags through the base station within the information return time window, wherein the first identity information comprises identity information of an electronic price tag itself and identity information of other electronic price tags that are able to be received within the positioning inspection time window, and the other electronic price tags comprise electronic price tags whose location are known and electronic price tags whose location are unknown;
a neighborhood relationship determining module (304) for determining a neighborhood relationship among the electronic price tags according to the first identity information returned by all the electronic price tags; and
a location information determining module (305) for determining location information of the electronic price tags whose location are unknown according to the neighborhood relationship and location information of the electronic price tags whose location are known.

4. An electronic price tag positioning system, **characterized by** comprising: the electronic price tag positioning apparatus according to claim 3, a base station and an electronic price tag, wherein the electronic price tags comprise electronic price tags whose location are known and electronic price tags whose location are unknown;
the electronic price tag positioning apparatus is configured to transmit the generated control instruction to the electronic price tags under the coverage of the base station through the base station, and the control instruction comprises a positioning inspection time window and an information return time window;
the electronic price tags are configured to return first identity information through the base station within the information return time window, wherein the first identity information comprises identity information of an electronic price tag itself and identity information of other electronic price tags that are able to be received within the positioning inspection time window, and the other electronic price tags comprise electronic price tags whose location are known and electronic price tags whose location are unknown;
the electronic price tag positioning apparatus is further configured to:
receive the first identity information within the information return time window;
determine a neighborhood relationship among the electronic price tags according to the first identity information returned by all the electronic price tags; and
determine location information of the electronic price tags whose location are unknown according to the neighborhood relationship and location information of the electronic price tags whose location are known.

5. The electronic price tag positioning system according to claim 4, wherein the electronic price tag is configured to transmit its own identity information to other electronic price tags within the positioning inspection time window, and receive identity information transmitted by other electronic price tags within the positioning inspection time window.

6. The electronic price tag positioning system according to claim 4, wherein the control instruction further comprises a wireless channel and power used by the electronic price tags for transmitting the identity information;
the electronic price tag is configured to transmit its own identity information to other electronic price tags in accordance with the wireless channel and the power, and receive identity information transmitted in accordance with the wireless channel and the power by other electronic price tags.

7. A computer readable storage medium, **characterized by** storing therein a computer program for executing the electronic price tag positioning method according to any one of claims 1 to 2.

## Patentansprüche

1. Elektronisches Preisschild-Positionierungsverfahren, **dadurch gekennzeichnet, dass** es umfasst:
Erzeugen (201), durch eine elektronische Preisschild-Positionierungsvorrichtung, einer Steueranweisung, wobei die Steueranweisung ein Positionierungsinspektion-Zeitfenster und ein Informationsrücklauf-Zeitfenster umfasst;
Übertragen (202), durch die elektronische Preisschild-Positionierungsvorrichtung, der Steueranweisung zu elektrischen Preisschildern unter Abdeckung einer Basisstation durch die Basisstation, wobei die elektrischen Preisschilder elektronische Preisschilder umfassen, deren Ort bekannt ist, sowie elektronische Preisschilder, deren Ort unbekannt ist;
Erhalten (203), durch die Preisschild-Positionierungsvorrichtung, von ersten Identitätsinformationen, welche von den elektronischen Preisschildern durch die Basisstation innerhalb des Informationsrücklauf-Zeitfensters zurückgegeben werden, wobei die ersten Identitätsinformationen Identitätsinformationen eines elektronischen Preisschilds selbst und Identitätsinformationen von anderen elektrischen Preisschildern umfassen, welche in der Lage sind, innerhalb des Positionierungsinspektion-Zeitfensters erhalten zu werden, und die anderen elektronischen Preisschilder elektronische Preisschilder umfassen, deren Ort bekannt ist, sowie elektronische Preisschilder, deren Ort unbekannt ist;
Bestimmen (204), durch die Preisschild-Positionierungsvorrichtung, einer Nachbarschaftsbeziehung zwischen den elektronischen Preisschildern gemäß den ersten Identitätsinformationen, welche von allen der elektronischen Preisschilder zurückgegeben werden; und
Bestimmen (205), durch die Preisschild-Positionierungsvorrichtung, von Ortsinformationen der elektronischen Preisschilder, deren Ort unbekannt ist, gemäß der Nachbarschaftsbeziehung und Ortsinformationen der elektronischen Preisschilder, deren Ort bekannt ist.

2. Elektronisches Preisschild-Positionierungsverfahren nach Anspruch 1, wobei die Steueranweisung ferner einen drahtlosen Kanal und eine von den elektronischen Preisschildern verwendete Leistung zum Übertragen der Identitätsinformationen umfasst;
wobei die ersten Identitätsinformationen umfassen:
Identitätsinformationen eines elektronischen Preisschilds selbst und Identitätsinformationen, welche gemäß dem drahtlosen Kanal und der Leistung von anderen elektronischen Preisschildern übertragen werden, welche in der Lage sind, innerhalb des Positionierungsinspektion-Zeitfensters erhalten zu werden.

3. Elektronische Preisschild-Positionierungsvorrichtung, **dadurch gekennzeichnet, dass** sie umfasst:
ein Steueranweisung-Erzeugungsmodul (301) zum Erzeugen einer Steueranweisung, wobei die Steueranweisung ein Positionierungsinspektion-Zeitfenster und ein Informationsrücklauf-Zeitfenster umfasst;
ein Steueranweisung-Ausgabemodul (302) zum Übertragen der Steueranweisung zu elektrischen Preisschildern unter Abdeckung einer Basisstation durch die Basisstation, wobei die elektrischen Preisschilder elektronische Preisschilder umfassen, deren Ort bekannt ist, sowie elektronische Preisschilder, deren Ort unbekannt ist;
ein Identitätsinformation-Empfangsmodul (303) zum Erhalten von ersten Identitätsinformationen, welche von den elektronischen Preisschildern durch die Basisstation innerhalb des Informationsrücklauf-Zeitfensters zurückgegeben werden, wobei die ersten Identitätsinformationen Identitätsinformationen eines elektronischen Preisschilds selbst und Identitätsinformationen von anderen elektrischen Preisschildern umfassen, welche in der Lage sind, innerhalb des Positionierungsinspektion-Zeitfensters erhalten zu werden, und die anderen elektronischen Preisschilder elektronische Preisschilder umfassen, deren Ort bekannt ist, sowie elektronische Preisschilder, deren Ort unbekannt ist;
ein Nachbarschaftsbeziehung-Bestimmungsmodul (304) zum Bestimmen einer Nachbarschaftsbeziehung zwischen den elektronischen Preisschildern gemäß den ersten Identitätsinformationen, welche von allen der elektronischen Preisschilder zurückgegeben werden; und
ein Ortsinformation-Bestimmungsmodul (305) zum Bestimmen von Ortsinformationen der elektronischen Preisschilder, deren Ort unbekannt ist, gemäß der Nachbarschaftsbeziehung und Ortsinformationen der elektronischen Preisschilder, deren Ort bekannt ist.

4. Elektronisches Preisschild-Positionierungssystem, **dadurch gekennzeichnet, dass** es umfasst: die elektronische Preisschild-Positionierungsvorrichtung nach Anspruch 3, eine Basisstation und ein elektronisches Preisschild, wobei die elektronischen Preisschilder elektronische Preisschilder umfassen, deren Ort bekannt ist, sowie elektronische Preisschilder, deren Ort unbekannt ist;
wobei die elektronische Preisschild-Positionierungsvorrichtung dazu eingerichtet ist, die erzeugte Steueranweisung zu den elektronischen Preisschildern unter Abdeckung der Basisstation durch die Basisstation zu übertragen, und die Steueranweisung ein Positionierungsinspektion-Zeitfenster und ein Informationsrücklauf-Zeitfenster umfasst;
wobei die elektronischen Preisschilder dazu eingerichtet sind, erste Identifikationsinformationen durch die Basisstation innerhalb des Informationsrücklauf-Zeitfensters zurückzugeben, wobei die ersten Identitätsinformationen Identitätsinformationen eines elektronischen Preisschilds selbst und Identitätsinformationen von anderen elektrischen Preisschildern umfassen, welche in der Lage sind, innerhalb des Positionierungsinspektion-Zeitfensters erhalten zu werden, und die anderen elektronischen Preisschilder elektronische Preisschilder umfassen, deren Ort bekannt ist, sowie elektronische Preisschilder, deren Ort unbekannt ist;
wobei die elektronische Preisschild-Positionierungsvorrichtung ferner dazu eingerichtet ist:
die ersten Identifikationsinformationen innerhalb des Informationsrücklauf-Zeitfensters zu erhalten;
eine Nachbarschaftsbeziehung unter den elektronischen Preisschildern gemäß den von allen der elektronischen Preisschildern zurückgegebenen ersten Identifikationsinformationen zu bestimmen; und
Ortsinformationen der elektronischen Preisschilder, deren Ort unbekannt ist, gemäß der Nachbarschaftsbeziehung und Ortsinformationen der elektronischen Preisschilder zu bestimmen, deren Ort bekannt ist.

5. Elektronisches Preisschild-Positionierungssystem nach Anspruch 4, wobei das elektronische Preisschild dazu eingerichtet ist, seine eigenen Identifikationsinformationen zu anderen elektronischen Preisschildern innerhalb des Positionierungsinspektion-Zeitfensters zu übertragen und Identifikationsinformationen zu erhalten, welche von anderen elektronischen Preisschildern innerhalb des Positionierungsinspektion-Zeitfensters übertragen werden.

6. Elektronisches Preisschild-Positionierungssystem nach Anspruch 4, wobei die Steueranweisung ferner einen drahtlosen Kanal und eine von den elektronischen Preisschildern zum Übertragen der Identifikationsinformationen verwendete Leistung umfasst;
wobei das elektronische Preisschild dazu eingerichtet ist, eine eigenen Identifikationsinformationen zu anderen elektronischen Preisschildern gemäß dem drahtlosen Kanal und der Leistung zu übertragen und Identitätsinformationen zu erhalten, welche gemäß dem drahtlosen Kanal und der Leistung von anderen elektronischen Preisschildern übertragen werden.

7. Computerlesbares Speichermedium, **dadurch gekennzeichnet, dass** es darin ein Computerprogramm zum Ausführen des elektronischen Preisschild-Positionierungsverfahrens nach einem der Ansprüche 1 bis 2 speichert.

## Revendications

1. Procédé de positionnement d'étiquette de prix électronique, **caractérisé en ce qu'**il comprend:
la génération (201), par un appareil de positionnement d'étiquette de prix électronique, d'une instruction de commande, dans lequel l'instruction de commande comprend une fenêtre temporelle d'inspection de positionnement et une fenêtre temporelle de renvoi d'information ;
la transmission (202), par l'appareil de positionnement d'étiquette de prix électronique, de l'instruction de commande à une étiquette de prix électronique sous la couverture d'une station de base via la station de base, dans lequel les étiquettes de prix électroniques comprennent des étiquettes de prix électroniques dont les emplacements sont connus et des étiquettes de prix électroniques dont les emplacements sont inconnus ;
la réception (203), par l'appareil de positionnement d'étiquette de prix électronique, des premières informations d'identité renvoyées par les étiquettes de prix électroniques via la station de base dans la fenêtre temporelle de renvoi d'information, dans lequel les premières informations d'identité comprennent des informations d'identité d'une étiquette de prix électronique elle-même et des informations d'identité d'autres étiquettes de prix électroniques qui peuvent être reçues dans la fenêtre temporelle d'inspection de positionnement, et les autres étiquettes de prix électroniques comprennent des étiquettes de prix électroniques dont les emplacements sont connus et des étiquettes de prix électroniques dont les emplacements sont inconnus ;
la détermination (204), par l'appareil de positionnement d'étiquette de prix électronique, d'une relation de voisinage entre les étiquettes de prix électroniques en fonction des premières informations d'identité renvoyées par l'ensemble des étiquettes de prix électroniques ; et
la détermination (205), par l'appareil de positionnement d'étiquette de prix électronique, des informations d'emplacement des étiquettes de prix électroniques dont les emplacements sont inconnus en fonction de la relation de voisinage et des informations d'emplacement des étiquettes de prix électroniques dont les emplacements sont connus.

2. Procédé de positionnement d'étiquette de prix électronique selon la revendication 1, dans lequel l'instruction de commande comprend en outre un canal sans fil et une puissance utilisée par les étiquettes de prix électroniques pour transmettre les informations d'identité ;
les premières informations d'identité comprennent :
des informations d'identité d'une étiquette de prix électronique elle-même et des informations d'identité transmises conformément au canal sans fil et à la puissance par d'autres étiquettes de prix électroniques qui peuvent être reçues dans la fenêtre temporelle d'inspection de positionnement.

3. Appareil de positionnement d'étiquette de prix électronique, **caractérisé en ce qu'**il comprend :
un module (301) de génération d'instructions de commande pour la génération d'une instruction de commande, dans lequel l'instruction de commande comprend une fenêtre temporelle d'inspection de positionnement et une fenêtre temporelle de renvoi d'information ;
un module (302) de délivrance d'instructions de commande pour la transmission de l'instruction de commande à une étiquette de prix électronique sous la couverture d'une station de base via la station de base, dans lequel les étiquettes de prix électroniques comprennent des étiquettes de prix électroniques dont les emplacements sont connus et des étiquettes de prix électroniques dont les emplacements sont inconnus ;
un module (303) de réception d'informations d'identité pour la réception des premières informations d'identité renvoyées par les étiquettes de prix électroniques via la station de base dans la fenêtre temporelle de renvoi d'information, dans lequel les premières informations d'identité comprennent des informations d'identité d'une étiquette de prix électronique elle-même et des informations d'identité d'autres étiquettes de prix électroniques qui peuvent être reçues dans la fenêtre temporelle d'inspection de positionnement, et les autres étiquettes de prix électroniques comprennent des étiquettes de prix électroniques dont les emplacements sont connus et des étiquettes de prix électroniques dont les emplacements sont inconnus
un module (304) de détermination de relation de voisinage pour la détermination d'une relation de voisinage entre les étiquettes de prix électroniques en fonction des premières informations d'identité renvoyées par l'ensemble des étiquettes de prix électroniques ; et
un module (305) de détermination d'informations d'emplacement pour la détermination des informations d'emplacement des étiquettes de prix électroniques dont les emplacements sont inconnus en fonction de la relation de voisinage et des informations d'emplacement des étiquettes de prix électroniques dont les emplacements sont connus.

4. Système de positionnement d'étiquette de prix électronique, **caractérisé en ce qu'**il comprend : l'appareil de positionnement d'étiquette de prix électronique selon la revendication 3, une station de base et une étiquette de prix électronique, dans lequel les étiquettes de prix électroniques comprennent des étiquettes de prix électroniques dont les emplacements sont connus et des étiquettes de prix électroniques dont les emplacements sont inconnus ;
l'appareil de positionnement d'étiquette de prix électronique est configuré pour transmettre l'instruction de commande générée aux étiquettes de prix électroniques sous la couverture de la station de base via la station de base, et l'instruction de commande comprend une fenêtre temporelle d'inspection de positionnement et une fenêtre temporelle de renvoi d'information ;
les étiquettes de prix électroniques sont configurées pour renvoyer des premières informations d'identité via la station de base dans la fenêtre temporelle de renvoi d'information, dans lequel les premières informations d'identité comprennent des informations d'identité d'une étiquette de prix électronique elle-même et des informations d'identité d'autres étiquettes de prix électroniques qui peuvent être reçues dans la fenêtre temporelle d'inspection de positionnement, et les autres étiquettes de prix électroniques comprennent des étiquettes de prix électroniques dont les emplacements sont connus et des étiquettes de prix électroniques dont les emplacements sont inconnus ;
l'appareil de positionnement d'étiquette de prix électronique est en outre configuré pour :
recevoir les premières informations d'identité dans la fenêtre temporelle de renvoi d'information ;
déterminer une relation de voisinage entre les étiquettes de prix électroniques en fonction des premières informations d'identité renvoyées par l'ensemble des étiquettes de prix électroniques ; et
déterminer des informations d'emplacement des étiquettes de prix électroniques dont l'emplacement est inconnu en fonction de la relation de voisinage et des informations d'emplacement des étiquettes de prix électroniques dont l'emplacement est connu.

5. Système de positionnement d'étiquette de prix électronique selon la revendication 4, dans lequel l'étiquette de prix électronique est configurée pour transmettre ses propres informations d'identité à d'autres étiquettes de prix électroniques dans la fenêtre temporelle d'inspection de positionnement, et recevoir des informations d'identité transmises par d'autres étiquettes de prix électroniques dans la fenêtre de temps d'inspection de positionnement.

6. Système de positionnement d'étiquette de prix électronique selon la revendication 4, dans lequel l'instruction de commande comprend en outre un canal sans fil et une puissance utilisée par les étiquettes de prix électroniques pour transmettre les informations d'identité ;
l'étiquette de prix électronique est configurée pour transmettre ses propres informations d'identité à d'autres étiquettes de prix électroniques en fonction du canal sans fil et de la puissance, et recevoir des informations d'identité transmises conformément au canal sans fil et à la puissance par d'autres étiquettes de prix électroniques.

7. Support de stockage lisible par ordinateur, **caractérisé par** le stockage d'un programme informatique pour exécuter le procédé de positionnement d'étiquette de prix électronique selon l'une quelconque des revendications 1 à 2.
